# EUROPEAN PATENT APPLICATION

(11) **EP 2 996 399 A1**
(43) Date of publication of application: **16.03.2016**
(21) Application number: 14794500.0
(22) Date of filing: 07.05.2014
(51) Int. Cl.: H04W 48/16, H04W 76/02

(54) **MOBILE COMMUNICATION TERMINAL AND WIRELESS ACCESS NETWORK DEVICE**

(30) Priority: 09.05.2013 JP 2013099698
(71) Applicant: NTT DOCOMO, INC., Chiyoda-ku Tokyo 100-6150 (JP)
(72) Inventor: UEKI, Atsushi, Tokyo 100-6150 (JP); AOYAGI, Kenichiro, Tokyo 100-6150 (JP); HAPSARI, Wuri Andarmawanti, Tokyo 100-6150 (JP); TAKAHASHI, Hideaki, Tokyo 100-6150 (JP)
(74) Representative: Hoffmann Eitle
(86) International application number: PCT/JP2014/062259
(87) International publication number: WO 2014/181800

(57) **Abstract**

The present invention shortens the time of the out-of-service state while suppressing an increase of power consumption. A mobile communication terminal UE according to the present invention includes a communication control unit 11 configured to make a cell selection using a parameter X notified by a network, if the terminal has failed to transmit an "RRC connection request" to a currently-visited cell #AN successive times.

## Description

### TECHNICAL FIELD

The present invention relates to a mobile communication terminal and a radio access network device.

### BACKGROUND ART

The RRC connection establishment procedure is defined in the 3GPP specification. This procedure is a connection establishment procedure necessary for a mobile communication terminal to start communications with a network.

In UTRAN (Universal Terrestrial Radio Access Network), when a mobile communication terminal UE starts communications in a certain cell, it transmits an "RRC connection request" to a radio access network device RAN to request establishment of an RRC connection.

Here, the mobile communication terminal UE increments a variable V300 by 1 at a time of transmission of the "RRC connection request."

Note that the mobile communication terminal UE manages a timer T300 in consideration of failure in transmission of the "RRC connection request."

When the timer T300 expires, the mobile communication UE compares V300 with N300 notified by the radio access network device RAN, and terminates the procedure if V300 > N300 is satisfied.

Meanwhile, a similar specification is defined in E-UTRAN. The mobile communication terminal UE terminates the above procedure if there is no response to the "RRC connection request" from the radio access network device RAN and if the timer T300 expires.

The procedure in E-UTRAN differs from the procedure in UTRAN in that it does not involve comparing V300 and N300.

Here, both the timers T300 and N300 are notified as broadcast information by the radio access network device.

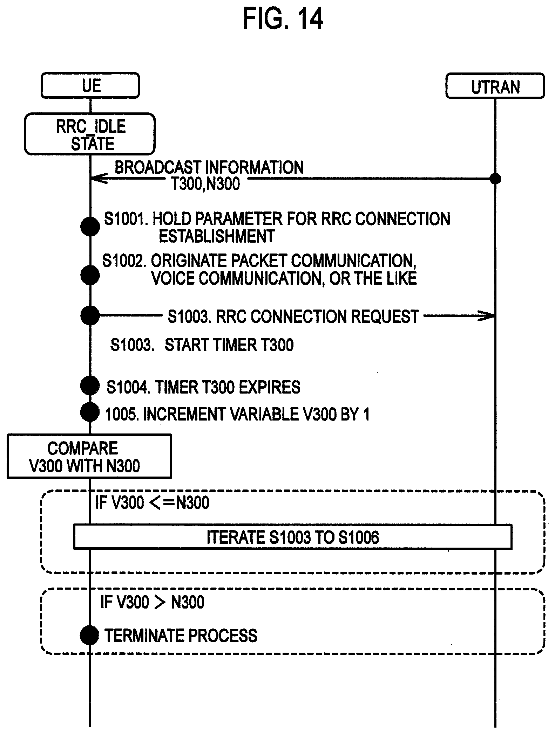

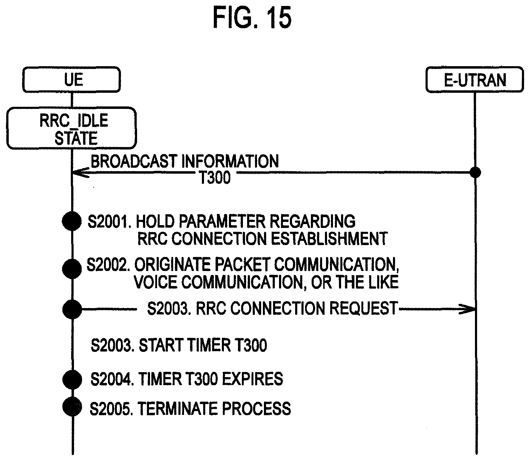

Fig. 14 illustrates a sequence involved when there is no response from the radio access network device in the RRC connection establishment procedure in UTRAN. Fig. 15 illustrates a sequence involved when there is no response from the radio access network device in the RRC connection establishment procedure in E-UTRAN.

First, with reference to Fig. 14, a description is given of the sequence involved when there is no response from the radio access network device in the RRC connection establishment procedure in UTRAN.

As illustrated in Fig. 14, in Step S1001, by way of broadcast information from a radio access network UTRAN which manages a currently-visited cell, a mobile communication terminal UE in RRC_IDLE state receives and holds a timer T300 and the number of re-transmissions N300 used to manage "RRC connection request" re-transmission.

In Step S1002, the mobile communication terminal UE not having established any RRC connection yet tries to start packet communications, voice communications, or the like.

In Step S1003, the mobile communication terminal UE transmits an "RRC connection request" to the radio access network UTRAN and starts the timer T300.

When the timer T300 expires in Step S1004, the mobile communication terminal UE increments V300 by 1 in Step S1005, and compares V300 with N300 in Step S1006.

If V300 is equal to or smaller than N300, the mobile communication terminal UE re-transmits the "RRC connection request" to the radio access network UTRAN and iterates the procedure from Step S1003 to Step S1006.

On the other hand, if V300 is larger than N300, the mobile communication terminal UE deems that the RRC connection establishment procedure has failed and terminates the process.

Then, the mobile communication terminal UE iterates the procedure from Step S1002 onward if it needs to start again packet communications, voice communications, or the like.

Second, with reference to Fig. 15, a description is given of the sequence involved when there is no response from the radio access network device in the RRC connection establishment procedure in E-UTRAN.

As illustrated in Fig. 15, in Step S2001, by way of broadcast information from a radio access network E-UTRAN which manages a currently-visited cell, a mobile communication terminal UE in RRC_IDLE state receives and holds a timer T300 used to manage "RRC connection request" re-transmission.

In Step S2002, the mobile communication terminal UE not having established any RRC connection yet tries to start packet communications, voice communications, or the like.

In Step S2003, the mobile communication terminal UE transmits an "RRC connection request" to the radio access network E-UTRAN and starts the timer T300.

When the timer T300 expires in Step S2004, the mobile communication terminal UE deems that the RRC connection establishment procedure has failed and terminates the process in Step S2005.

Then, the mobile communication terminal UE iterates the procedure from Step S2002 onward if it needs to start again packet communications, voice communications, or the like.

### PRIOR ART DOCUMENT

### PATENT DOCUMENT

PATENT DOCUMENT 1: Japanese Patent Application Publication No. Hei 6-104831
PATENT DOCUMENT 2: Japanese Patent Application Publication No. 2009-296535
PATENT DOCUMENT 3: Japanese Patent Application Publication No. 2012-049877

### SUMMARY OF THE INVENTION

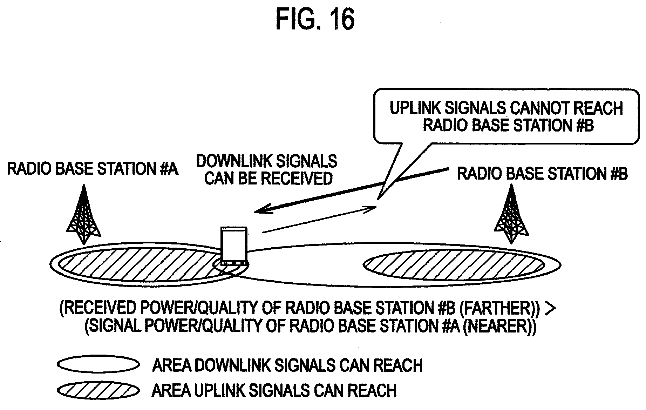

Here, there is a case where no response to the "RRC connection request" can be received from the radio access network due to some reason, for example when the mobile communication terminal UE is located in a cell, from which the UE detects sufficient received power of downlink signals but uplink signals are not reachable as illustrated in Fig. 16, or when the radio access network cannot make a response due to network congestion.

As a specific example, there is a conceivable case where the mobile communication terminal UE on a shore side camps on a cell under a radio base station #B located on the opposite shore side. This situation happens when the received power of downlink signals from the radio base station #B is higher than the received power of radio waves from a radio base station #A located at a physically closer to the UE.

In the above case, the mobile communication terminal UE may not be able to receive a response from the radio access network even if the UE successively transmits "RRC connection requests" to the same cell.

In this case, there is a problem that a service unavailable situation, in which the user is unable to enjoy the service, continues.

There is also a problem that the power consumption of the mobile communication terminal UE increases due to successive transmission of unnecessary "RRC connection requests."

The present invention has been therefore made in view of the above problems, and an objective thereof is to provide a mobile communication terminal and a radio access network device capable of shortening the time of the out-of-service state while suppressing an increase of power consumption.

A first feature of the present invention is summarized as a mobile communication terminal including a communication control unit configured to make a cell selection using a predetermined parameter notified by a network, if the terminal has failed to transmit a connection establishment request signal to a currently-visited cell a predetermined number of times successively.

A second feature of the present invention is summarized as a radio access network device including a communication control unit configured to transmit a predetermined parameter to a mobile communication terminal. Here, the predetermined parameter is to instruct the mobile communication terminal to make a cell selection using the predetermined parameter if the terminal has failed to transmit a connection establishment request signal to a currently-visited cell a predetermined number of times successively.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile communication terminal according to the first embodiment of the present invention.
[Fig. 3] Fig. 3 is a chart illustrating an example of parameters X managed by a management unit of the mobile communication terminal according to the first embodiment of the present invention.
[Fig. 4] Fig. 4 is a diagram illustrating an example of threshold-based determination processing in cell selection performed by a communication control unit of the mobile communication terminal according to the first embodiment of the present invention.
[Fig. 5] Fig. 5 is a functional block diagram of a radio access network device according to the first embodiment of the present invention.
[Fig. 6] Fig. 6 is a chart illustrating an example of determination conditions used by a determination unit of the radio access network device according to the first embodiment of the present invention.
[Fig. 7] Fig. 7 is a chart illustrating an example of a cycle on which determination is made by the determination unit of the radio access network device according to the first embodiment of the present invention.
[Fig. 8] Fig. 8 is a flowchart illustrating an operation of the mobile communication terminal according to the first embodiment of the present invention.
[Fig. 9] Fig. 9 is a flowchart illustrating the operation of the mobile communication terminal according to the first embodiment of the present invention.
[Fig. 10] Fig. 10 is a flowchart illustrating the operation of the mobile communication terminal according to the first embodiment of the present invention.
[Fig. 11] Fig. 11 is a flowchart illustrating the operation of the mobile communication terminal according to the first embodiment of the present invention.
[Fig. 12] Fig. 12 is a flowchart illustrating the operation of the mobile communication terminal according to the first embodiment of the present invention.
[Fig. 13] Fig. 13 is a flowchart illustrating an operation of the radio access network device according to the first embodiment of the present invention.
[Fig. 14] Fig. 14 is a diagram of a sequence involved when there is no response from the radio access network device in the conventional RRC connection establishment procedure in UTRAN.
[Fig. 15] Fig. 15 is a diagram of a sequence involved when there is no response from the radio access network device in the conventional RRC connection establishment procedure in E-UTRAN.
[Fig. 16] Fig. 16 is a diagram for explaining problems of the conventional technique.

### MODE FOR CARRYING OUT THE INVENTION

### (Mobile Communication System according to Embodiment of Present Invention)

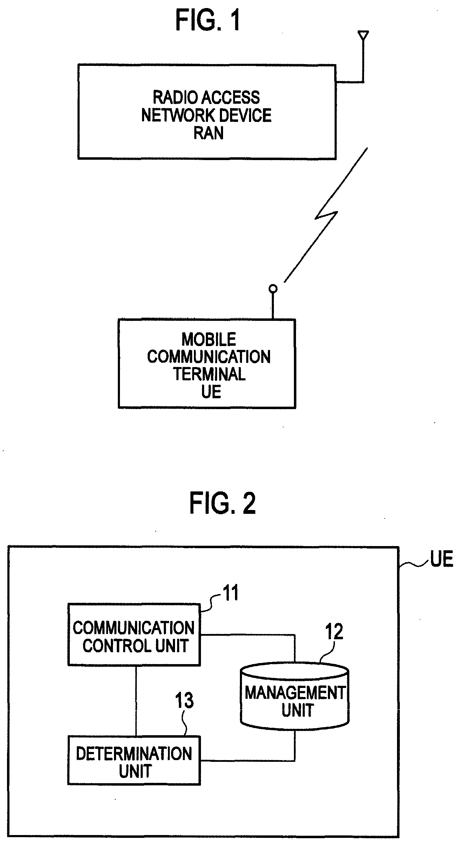

A mobile communication system according to an embodiment of the present invention is described with reference to Figs. 1 to 13. While a WCDMA or LTE mobile communication system is exemplified in this embodiment as the mobile communication system according to this embodiment, the present invention is applicable to a mobile communication system other than the WCDMA or LTE mobile communication system.

As illustrated in Fig. 1, the mobile communication system according to this embodiment includes a radio access network device RAN and a mobile communication terminal UE.

Here, the radio access network device RAN means a radio network control station RNC if this is a WCDMA radio access network device and means a radio base station eNB if this is an LTE radio access network device.

As illustrated in Fig. 2, the mobile communication terminal UE according to this embodiment includes a communication control unit 11, a management unit 12, and a determination unit 13.

The communication control unit 11 is configured to handle various kinds of control over the mobile communication terminal UE, e.g., overall communications control of the UE.

The management unit 12 is configured to manage parameters X and the like notified by a network.

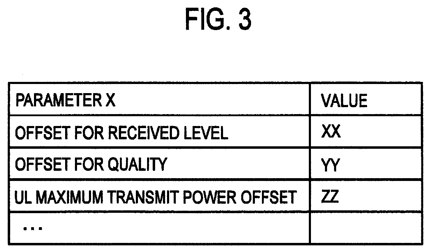

As illustrated in Fig. 3, as the parameters X, the management unit 12 manages "offset for received level, " "offset for quality," and "UL maximum transmit power offset," for example.

The determination unit 13 is configured to determine whether or not the transmission of an "RRC connection request" to a currently-visited cell has failed N successive times.

For example, the determination unit 13 may determine whether or not the transmission of an "RRC connection request" to the same currently-visited cell has failed N successive times.

The communication control unit 11 is configured to make a cell selection using the parameters X if the transmission of an "RRC connection request" to a currently-visited cell (or the same currently-visited cell) has failed N successive times and if the parameters X are validly managed by the management unit 12.

On the other hand, the communication control unit 11 is configured to make a cell selection according to the rules of the existing 3GPP standard specification if the transmission of an "RRC connection request" to a currently-visited cell (or the same currently-visited cell) has failed N successive times but if the parameters X are not validly managed by the management unit 12.

For example, "N = N300 x M" in UTRAN and "N = M" in E-UTRAN. Note that "M" may be a value uniquely held by the mobile communication terminal UE or may be a parameter broadcasted by the radio access network device RAN.

Note that, in this description, the "cell selection" includes both "cell selection" and "cell reselection."

Here, the communication control unit 11 may use the above parameters X as offset values in threshold-based determination processing in the cell selection described above.

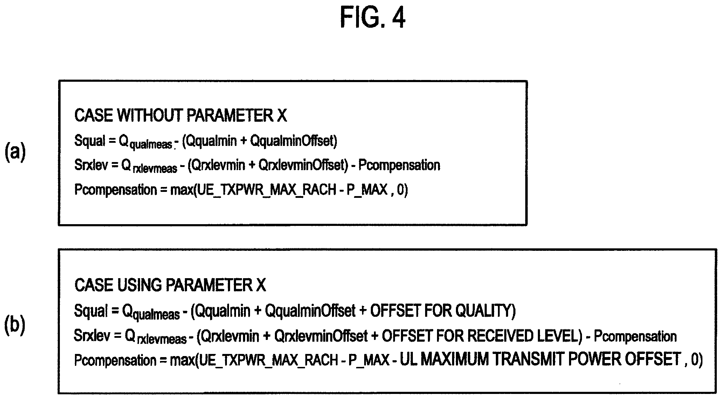

Specifically, Fig. 4(a) illustrates an example of threshold-based determination processing in cell selection without the parameters X and Fig. 4 (b) illustrates an example of threshold-based determination processing in cell selection with the parameters X.

Note that the communication control unit 11 determines whether or not transfer to another cell is possible based on a result of the threshold-based determination processing in cell selection described above.

If the communication control unit 11 determines that transfer to another cell is possible, it causes the UE to transfer to another cell according to the existing 3GPP standard specification.

In contrast, if the communication control unit 11 determines that transfer to another cell is not possible, it causes the UE to remain in the current cell according to the existing 3GPP standard specification.

Besides, the management unit 12 may delete the parameters X when the cell, on which the mobile communication terminal UE is currently camps is changed or when the mobile communication terminal UE is turned off (i.e., the mobile communication terminal UE is turned off and then turned on).

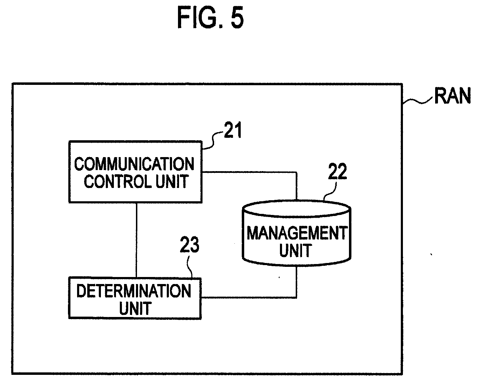

As illustrated in Fig. 5, the radio access network device RAN includes a communication control unit 21, a management unit 22, and a determination unit 23.

The communication control unit 21 is configured to handle various kinds of control over the radio access network device RAN, e.g., general control over communications of the RAN.

Specifically, the communication control unit 21 transmits the above parameters X to the mobile communication terminal UE. For example, the communication control unit 21 may transmit these parameters X via broadcast information.

The management unit 22 is configured to manage the parameters X and the like to be notified to the mobile communication terminal UE.

The determination unit 23 is configured to determine whether or not determination conditions are satisfied.

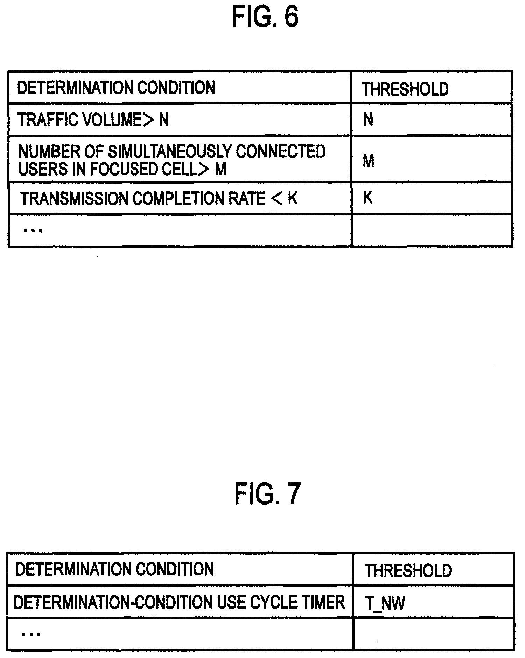

As illustrated in Fig. 6, conceivable determination conditions include whether network traffic exceeds a threshold N, whether the number of simultaneously connected users (the number of simultaneously connected mobile stations UE) in a focused cell exceeds a threshold M, and whether the transmission completion rate falls below a threshold K, for example.

Here, the communication control unit 21 may transmit the parameters X to the mobile communication terminal UE only when the determination unit 23 determines that one or more of the above determination conditions are satisfied.

In addition, the determination unit 23 may periodically determine whether or not the determination conditions are satisfied. In this case, as illustrated in Fig. 7, the determination unit 23 may decide the timing for the above determination by using a determination-condition use cycle timer (threshold: T_NW), for example.

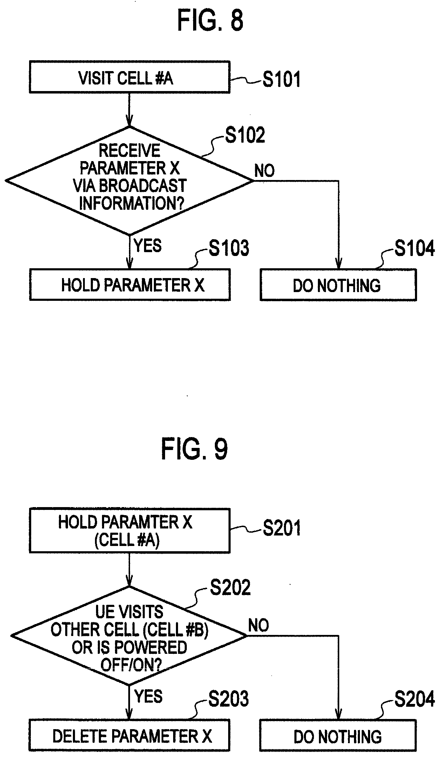

Hereinbelow, an operation of the mobile communication system according to this embodiment is described with reference to Figs. 8 to 13.

First, with reference to Fig. 8, a description is given of parameter X acquisition processing performed by the mobile communication terminal UE.

As illustrated in Fig. 8, when the mobile communication terminal UE is in RRC_IDLE state in a cell #A in Step S101 and receives parameters X from the network via broadcast information in Step S102, the UE holds the parameters X in Step S103.

On the other hand, when the mobile communication terminal UE is in RRC_IDLE state in Step S101 and receives no parameters X from the network via broadcast information in Step S102, the UE performs no process in Step S104.

Second, with reference to Fig. 9, a description is given of parameter X deletion processing performed by the mobile communication terminal UE.

As illustrated in Fig. 9, when the mobile communication terminal UE in RRC_IDLE state in the cell #A holds the parameters X acquired in the cell #A in Step S201, and if the UE transfers to another cell (cell #B, for example) or is turned off and then turned on in Step S202, the UE judges the parameters X as being invalid and deletes them in Step S203.

On the other hand, when the mobile communication terminal UE in RRC_IDLE state in the cell #A holds the parameters X acquired in the cell #A in Step S201, and if the UE neither transfers to another cell (cell #B, for example) nor is turned off in Step S202, the UE performs no process in Step S204.

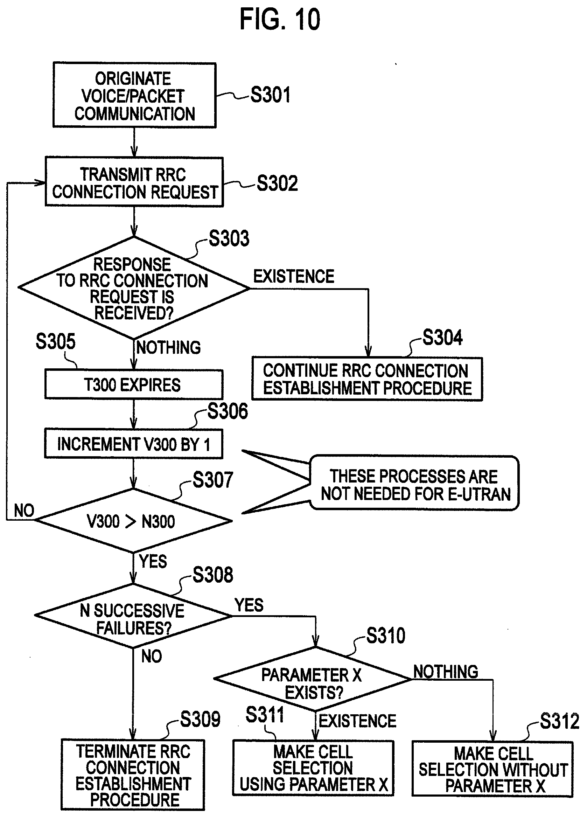

Third, with reference to Fig. 10, a description is given of processing for the mobile communication terminal UE to establish an RRC connection.

As illustrated in Fig. 10, when the mobile communication terminal UE is to perform voice communications or packet communications in the cell #A in Step S301, the UE transmits an "RRC connection request" to the cell #A in Step S302.

If the mobile communication terminal UE receives a response to the "RRC connection request" from the network in Step S303, the UE continues the RRC connection establishment procedure in Step S304.

On the other hand, if the mobile communication terminal UE receives no response to the "RRC connection request" from the network in Step S303 and if a timer T300 expires in Step S304, the UE increments V300 by 1 in Step S306.

The mobile communication terminal UE executes the procedure in Step S3 08 if it judges that V300 is larger than N300.

On the other hand, the mobile communication terminal UE executes the procedure in Step S302 if it judges that V300 is equal to or smaller than N300.

The mobile communication terminal UE determines whether or not the UE is in a situation where it has received no response to the "RRC connection request" N successive times.

If the mobile communication terminal UE judges that the UE is not in a situation where it has received no response to the "RRC connection request" N successive times, the UE terminates the RRC connection establishment procedure in Step S309.

On the other hand, if the mobile communication terminal UE judges that the UE is in a situation where it has received no response to the "RRC connection request" N successive times, the UE determines whether or not it has valid parameters X in Step S310.

If the mobile communication terminal UE determines that it has valid parameters X, the UE makes a cell selection using the parameters X in Step S311.

On the other hand, if the mobile communication terminal UE determines that it has no valid parameters X, the UE makes a cell selection without using the parameters X.

Note that the procedures of Steps S306 and S307 are not executed if the radio access network is E-UTRAN.

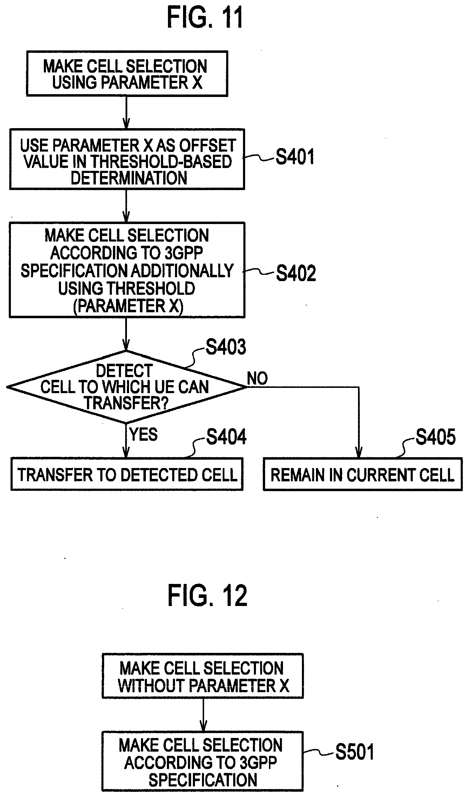

Fourth, with reference to Fig. 11, a description is given of processing for the mobile communication terminal UE to make a cell selection using the parameters X.

As illustrated in Fig. 11, the mobile communication terminal UE uses the parameters X as offset values in threshold-based determination processing in cell selection in Step S401, and makes a cell selection based on a result of the threshold-based determination processing in Step S402.

If the mobile communication terminal UE detects a cell to which it can transfer in Step S403, the UE transfers to this cell in Step S404.

On the other hand, if the mobile communication terminal UE cannot detect a cell to which it can transfer in Step S403, the UE remains in the current cell.

Fifth, with reference to Fig. 12, a description is given of processing for the mobile communication terminal UE to make a cell selection without using the parameters X.

As illustrated in Fig. 12, in Step S501, the mobile communication terminal UE makes a cell selection according to the rules of the existing 3GPP standard specification.

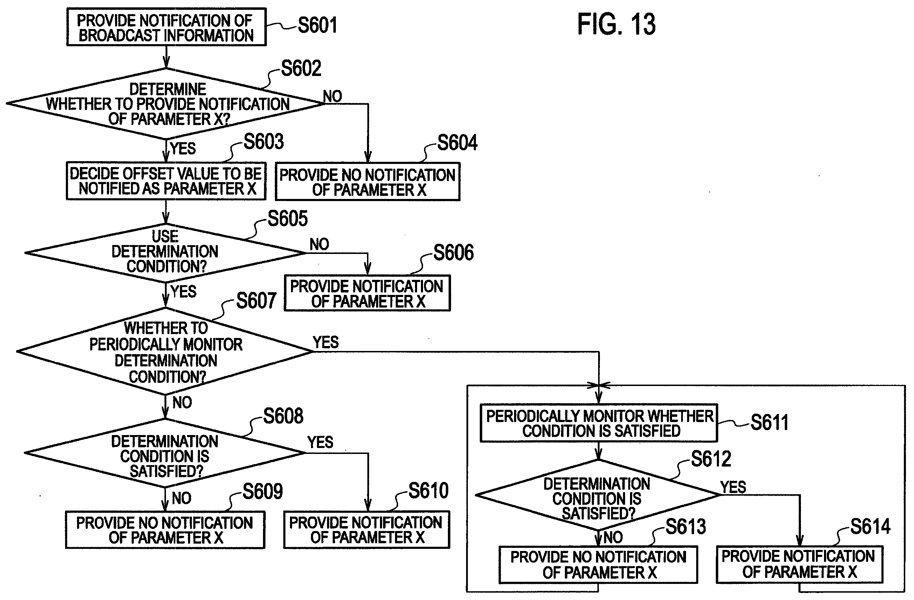

Sixth, with reference to Fig. 13, a description is given of parameter X transmission processing performed in the radio access network device RAN.

As illustrated in Fig. 13, when the radio access network device RAN is to transmit broadcast information in the cell #A in Step S601, the RAN determines whether or not to provide a notification of parameters X in Step S602.

If the radio access network device RAN determines not to provide a notification of the parameters X, the RAN transmits broadcast information without the parameters X in the cell #A in Step S603.

On the other hand, if the radio access network device RAN determines to provide a notification of the parameters X, the RAN decides the type of the parameters X to be notified in the cell #A in Step S603.

In Step S605, the radio access network device RAN decides whether or not to use the determination conditions to decide whether or not to provide a notification of the parameters X.

If the radio access network device RAN decides not to use the determination conditions in Step S605, the RAN provides a notification of the parameters X in the cell #A without condition.

On the other hand, if the radio access network device RAN decides to use the determination conditions in Step S605, the RAN decides in Step S607 whether or not to periodically determine whether or not the determination conditions are satisfied.

The radio access network device RAN executes the procedure in Step S608 if it decides in Step S607 not to periodically determine whether or not the determination conditions are satisfied, and executes the procedure in Step S611 if it decides in Step S607 to periodically determine whether or not the determination conditions are satisfied.

The radio access network device RAN determines whether or not the determination conditions are satisfied in Step S608.

The radio access network device RAN does not provide a notification of the parameters X in the cell #A in Step S609 if it determines in Step S608 that the determination conditions are not satisfied, and provides a notification of the parameters X in the cell #A in Step S610 if it determines in Step S608 that the determination conditions are satisfied.

The radio access network device RAN determines whether or not the determination conditions are satisfied in Step S612 if the determination-condition use cycle timer expires in Step S611.

The radio access network device RAN does not provide a notification of the parameters X in the cell #A in Step S613 if it determines in Step S612 that the determination conditions are not satisfied, and provides a notification of the parameters X in the cell #A in Step S614 if it determines in Step S612 that the determination conditions are satisfied.

According to the mobile communication system of this embodiment, even if the mobile communication terminal UE has failed to deliver an "RRC connection request" to the radio access network device RAN N successive times or has received no response to the "RRC connection request" from the radio access network device RAN due to some reasons, the UE can make a cell selection using parameters X, if the parameters X are notified by the network, to start communications in a proper cell other than the currently-visited cell.

In addition, according to the mobile communication system of this embodiment, the mobile communication terminal UE no longer transmits "RRC connection requests" in the currently-visited cell more than necessary, which can reduce power consumption of the mobile communication terminal UE.

The features of the present embodiment may also be expressed as follows.

A first feature of the present embodiment is summarized as a mobile communication terminal UE including a communication control unit 11 configured to make a cell selection using parameter X (predetermined parameter) notified by a network, if the mobile communication terminal UE has failed to transmit an "RRC Connection Request (connection establishment request signal)" to a currently-visited cell N times (predetermined number of times) successively.

According to the above aspect, the mobile communication terminal UE can make a cell selection using the parameter X to start communications in a proper cell other than the currently-visited cell.

In addition, according to the above aspect, the mobile communication terminal UE no longer transmits "RRC connection requests" in the currently-visited cell more than necessary, which can reduce power consumption of the mobile communication terminal UE.

In the first feature of the present embodiment, the communication control unit 11 may make the cell selection using the parameter X if the mobile communication terminal UE has failed to transmit an "RRC Connection Request" to a same cell N times successively.

According to the above aspect, the mobile communication terminal UE makes a cell selection using the parameter X only if it has failed to transmit an "RRC connection request" to a single cell N successive times, which can avoid a situation where the UE transfers to another cell even from the current cell whose communication condition is not poor.

In the first feature of the present embodiment, the communication control unit 11 may use the parameter X as an offset value in threshold-based determination processing in the cell selection.

The above aspect can facilitate transfer to another cell from the cell in which the transmission of an "RRC connection request" has failed N successive times.

In the first feature of the present embodiment, the mobile communication terminal UE may further include a management unit 12 configured to manage the parameter X. Here, the management unit 12 may delete the parameter X when a cell visited by the mobile communication terminal UE is changed or when the mobile communication terminal UE is turned off.

According to the above aspect, when the cell the mobile communication terminal UE is currently in is changed or when the mobile communication terminal UE is turned off, the mobile communication terminal UE can delete the parameter X based on the judgment that use of the parameter X that the UE currently holds is not appropriate.

A second feature of the present embodiment is summarized as a radio access network device RAN including a communication control unit 21 configured to transmit parameter X to a mobile communication terminal UE. Here, the parameter X is to instruct the mobile communication terminal UE to make a cell selection using the parameter X if the mobile communication terminal UE has failed to transmit an "RRC Connection Request" to a currently-visited cell N times successively.

According to the above aspect, the radio access network device RAN can provide a notification of the parameter X to the mobile communication terminal UE.

In the second feature of the present embodiment, the communication control unit 21 may transmit the parameter X via broadcast information.

According to the above aspect, the radio access network device RAN can provide a notification of the parameter X efficiently to the mobile communication terminal UE which is in a cell under its control.

In the second feature of the present embodiment, the communication control unit 21 may transmit the parameter X only when a determination condition is satisfied.

According to the above aspect, the radio access network device RAN can provide a notification of the parameter X only in such an environment that the communication condition degrades.

In the second feature of the present embodiment, the radio access network device RAN may further include a determination unit 23 configured to periodically determine whether or not the determination condition is satisfied.

According to the above aspect, the radio access network device RAN can keep track of changes in the communication condition periodically.

It should be noted that the foregoing operations of the radio access network device RAN and the mobile communication terminal UE may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the radio access network device RAN and the mobile communication terminal UE. Otherwise, the storage medium and the processor may be provided as discrete components inside the radio access network device RAN and the mobile communication terminal UE.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-099698 (filed on May 9, 2013) is incorporated by reference in the present specification.

### INDUSTRIAL APPLICABILITY

As has been described so far, the present invention can provide a mobile communication terminal and a radio access network device capable of shortening the time of the out-of-service state while suppressing an increase of power consumption.

### EXPLANATION OF THE REFERENCE NUMERALS

- RAN: radio access network device
- UE: mobile communication terminal
- 11, 21: communication control unit
- 12, 22: management unit
- 13, 23: determination unit

## Claims

1. A mobile communication terminal comprising a communication control unit configured to make a cell selection using a predetermined parameter notified by a network, if the terminal has failed to transmit a connection establishment request signal to a currently-visited cell a predetermined number of times successively.

2. The mobile communication terminal according to claim 1, wherein the communication control unit makes the cell selection using the predetermined parameter if the terminal has failed to transmit a connection establishment request signal to a same cell a predetermined number of times successively.

3. The mobile communication terminal according to claim 1 or 2, wherein the communication control unit uses the predetermined parameter as an offset value in threshold-based determination processing in the cell selection.

4. The mobile communication terminal according to any one of claims 1 to 3, further comprising a management unit configured to manage the predetermined parameter, wherein
the management unit deletes the predetermined parameter when a cell visited by the mobile communication terminal is changed or when the mobile communication terminal is turned off.

5. A radio access network device comprising a communication control unit configured to transmit a predetermined parameter to a mobile communication terminal, wherein
the predetermined parameter is to instruct the mobile communication terminal to make a cell selection using the predetermined parameter if the terminal has failed to transmit a connection establishment request signal to a currently-visited cell a predetermined number of times successively.

6. The radio access network device according to claim 5, wherein the communication control unit transmits the predetermined parameter via broadcast information.

7. The radio access network device according to claim 5 or 6, wherein the communication control unit transmits the predetermined parameter only when a determination condition is satisfied.

8. The radio access network device according to claim 7, further comprising a determination unit configured to periodically determine whether or not the determination condition is satisfied.
